## Europäisches Patentamt
## European Patent Office
## Office européen des brevets

(11) Publication number: **0 017 383**
A1

## EUROPEAN PATENT APPLICATION

(21) Application number: 80300833.3

(51) Int. Cl.³: **G 01 S 15/89**
**A 61 B 10/00**

(22) Date of filing: 19.03.80

(30) Priority: 20.03.79 GB 7909686

(43) Date of publication of application:
15.10.80 Bulletin 80/21

(84) Designated Contracting States:
DE FR NL

(71) Applicant: The General Electric Company Limited
1 Stanhope Gate
London W1A 1EH(GB)

(72) Inventor: Brown, Harold Thomas
82 Mount Park Road
Eastcote Pinner Middlesex, HA5 2JU(GB)

(72) Inventor: Groves, Raymond Derek
18 Farmdale Road Greenwich
London, S.E.10(GB)

(74) Representative: Pope, Michael Bertram Wingate
Central Patent Department The General Electric
Company Limited Hirst Research Centre
Wembley Middlesex HA9 7PP(GB)

(54) Ultrasonic imaging system.

(57) An ultrasonic imaging system utilising a multi-element ultrasonic transducer array for transmission and reception of ultrasonic signals wherein a different number of elements (L) is used in reception compared to transmission so as to reduce sidelobes in the resultant ultrasonic beam pattern. The elements may also be focussed to a different focal length in reception compared to transmission so as to obtain increased depth of field.

EP 0 017 383 A1

./...

Fig.1.

This invention relates to ultrasonic imaging systems for producing ultrasonic images of objects.

In such systems a multi-element ultrasonic transducer array is conventionally used for transmission and reception of ultrasonic signals. This enables electronic scanning to be obtained by sequencing the elements used in transmission and reception along the array. Also by setting the number of elements used and setting the relative delays of the signals received or transmitted by individual elements the depth of field and the focal length of the resultant ultrasonic beam may be set. Such a system will hereinafter be referred to as a system of the kind specified.

As with optical systems the highest lateral resolution is obtained by using the smallest possible F number ($F = \frac{f}{D}$, where f = focal length and D = aperture size), i.e. by using the largest possible aperture and focussing the ultrasonic beam to produce the narrowest ultrasonic beam at the depth of interest. However, this type of focussing, known as strong focussing in ultrasonic systems, produces a limited depth of field because the beam diverges rapidly on either side of the focal point.

For this reason, in systems using strong focussing dynamic focussing may be employed, as in the system of U.K. Patent No. 1552431. Alternatively, in systems using a fixed focus, weak focussing, i.e. higher F number, may be employed (at the cost of reducing lateral resolution) to give a greater depth of field.

It is an object of this invention to provide a system of the kind specified wherein the above disadvantages may be overcome.

In accordance with the invention an ultrasonic imaging system utilising a multi-element ultrasonic transducer array for transmission and reception of ultrasonic signals uses a different number of elements in reception compared to transmission so as to reduce sidelobes in the resultant ultrasonic beam pattern.

Preferably the numbers of elements used in reception and transmission are in the ratio 3:2 or vice versa. Alternatively the numbers of elements used in reception and transmission are in the ratio 4:3 or vice versa.

Preferably a larger number of elements is used in reception than is used in transmission.

Preferably the elements are focussed to a different focal length in reception compared to transmission. Preferably the elements are focussed to a larger focal length in reception than in transmission.

Preferably substantially twelve elements are used in reception at a focal length of substantially eleven centimetres and substantially eight elements are used in transmission at a focal length of substantially six centimetres.

A system of the kind specified in accordance with the invention will now be described, by way of example only, with reference to the accompanying drawings in which:

Figure 1 shows a schematic block diagram of part of the system;

Figure 2 shows signals appearing at various points in Figure 1;

Figure 3 shows a circuit diagram of a transmitter of the system; and

Figures 4 and 5 show the amplitudes and beam widths at half power respectively of ultrasonic beams produced in the system.

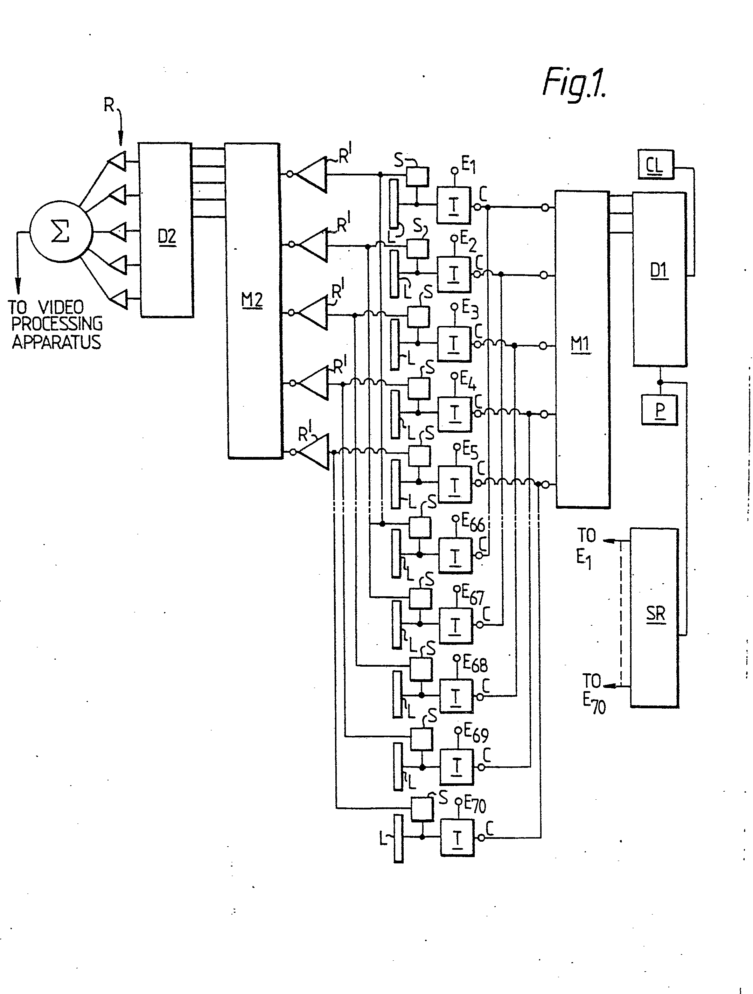

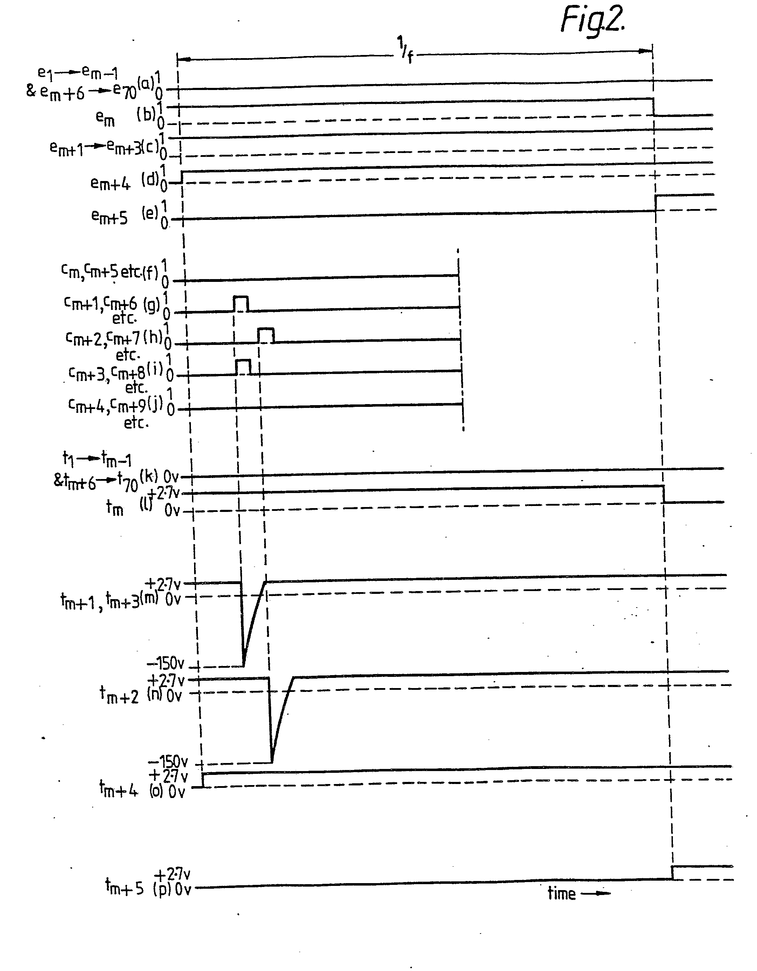

Referring firstly to Figure 1, the system for producing an ultrasonic image of an object, e.g. part

—4—

of a human body, includes a linear array of 70 identical ultrasonic transducers L, only ten of which are shown. There is associated with each transducer L a transmitter circuit T (which will be described in greater detail below), each of which produces a transmission pulse in the form of a 150 V negative voltage spike (see Figures 2(m) & 2(n)) in response to the receipt of a control signal (a digital "1", see Figures 2(g) to 2(i)) applied to its input C in the presence of an enable signal (see Figures 2(a) to 2(e)) applied to its input E. The voltage spike is fed to the associated transducer L to cause the transducer to emit a pulse of ultrasonic energy.

Figure 2 shows the enable signals and control signals applied to, and the outputs from, all the transmitter circuits T of the system when five elements, m to m+4, are selected to form the active group in reception and three of those elements, m+1 to m+3, are selected to form the smaller active group in transmission.

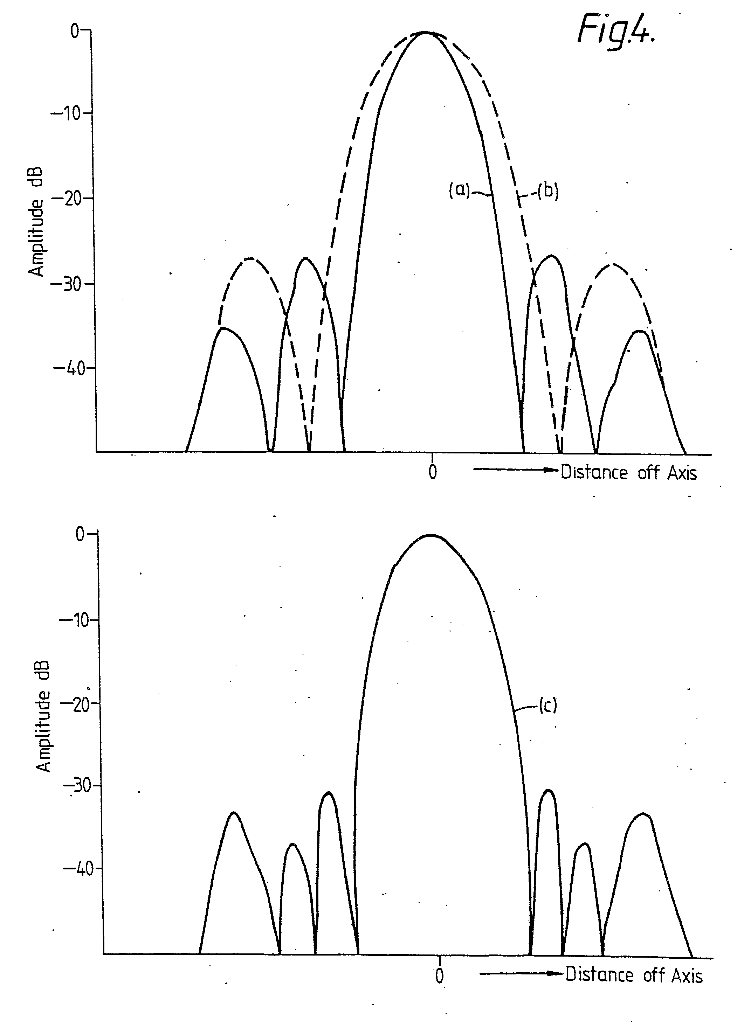

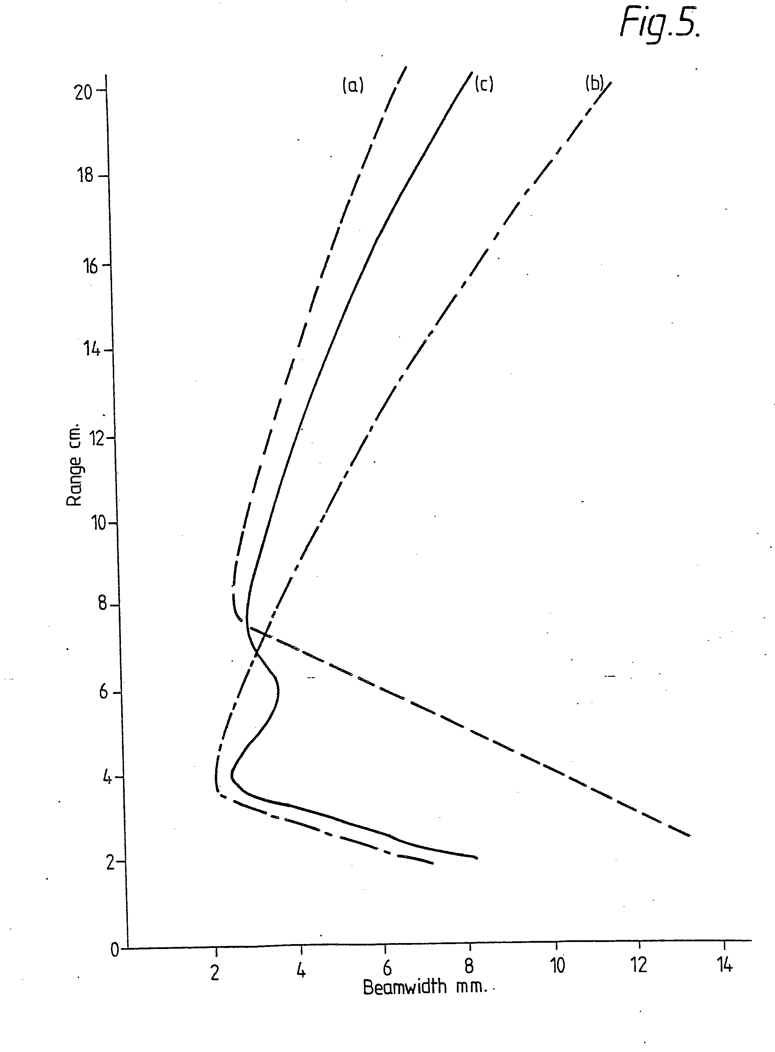

The system is described herein, for simplicity, as using five elements in the selected active group in reception and three elements in the selected active group in transmission, although better results are obtained using twelve and eight elements in the selected active group in reception and transmission respectively, these results being shown in Figures 4 and 5.

Figures 2(a) to 2(e) show enable signals $e_n$ applied to the enable inputs E of the transmitter circuits T associated with the elements of the array.

Figures 2(f) to 2(j) show the control signals $c_n$ applied to the control input C of the transmitter circuits T.

Figures 2(k) to 2(p) show the outputs $t_n$ from the transmitter circuits T.

A curved wavefront is caused to be emitted from the transducers L of a selected active group by delaying the application of transmission pulses to the transducers, the delay increasing from the outer elements of the active group towards the centre. The transmission pulses are delayed by delaying the control signals (as can be seen from Figures 2(g) to 2(i)) in response to which the transmission pulses are produced.

The control signals (digital "1"'s) are produced by a pulse repetition clock P : a digital "1" is produced every $1/f$ seconds, f being the frequency of production of ultrasonic pulses. The control signal (digital "1") is fed into a digital shift register D1 and outputs are taken from the shift register at points so spaced as to give the required quadratic relationship between the delays of the control signal (digital "1") appearing at the outputs. The quadratic relationship of the delays of the output signals having been selected by the positions of the taps along the shift register, the absolute values of the delays (and so the focal length of the emitted ultrasonic pulse) may be varied by varying the frequency of the shift register clock CL.

The output low level control signals (digital "1"'s) from the shift register D1 are fed to a digital multiplexer M1 which sequences the control signals $c_n$ to the transmitters T of the correct elements of the active group of transducers L to cause the transmitters to produce high level transmission pulses as already mentioned. The active group in reception is determined by the application of enable signals to the transmitters T associated with the elements L of the active group. The enable signals $e_n$ are produced from a shift register SR which is used to sequence the active group along the array. The shift register SR is of the recirculating type and has a number of elements equal to the number of transducer elements in the array. Each element is tapped and the taps are connected to the respective enable inputs E of the transmitters T. Enable signals (digital "1"'s) are fed into five adjacent elements of the shift register when the system is activated and the

-6-

shift register is clocked at the pulse repetition frequency f of the system.

In reception, ultrasonic signals received by the transducer elements L and converted into electrical signals are passed to the receiver part of the system via switches S in the form of high voltage diodes. The switches are controlled by a small positive bias (e.g. + 1.4 Volts) applied at the receiver inputs and by the quiescent outputs of the transmitters T as determined by the enable signals applied to the transmitters :: a low positive output (e.g. + 2.7 Volts) forward biasses the respective switch and turns it on, a high negative output (e.g. - 150 Volts) reverse biases the respective switch and turns it off. In this way the diodes also protect the receiver part of the system from the high negative voltage pulses from the transmitters T because these high voltage pulses reverse bias the diodes.

The received signals from the transducers are conditioned in low noise receiver pre-amplifiers R', delayed by analogue delay lines, shown collectively at D2, to equalise delays from the desired focal point, amplified in amplifiers R and summed. The summed signals are then passed to video processing apparatus (not shown) in which the signals are used to provide a video image of the object on a cathode ray tube screen in a conventional way. As in transmission the signals are passed through a multiplexer M2 to connect the correct delays into the paths of signals from the correct elements of the active group. Unlike the digital multiplexer M1 used in transmission, the multiplexer M2 is an analogue multiplexer.

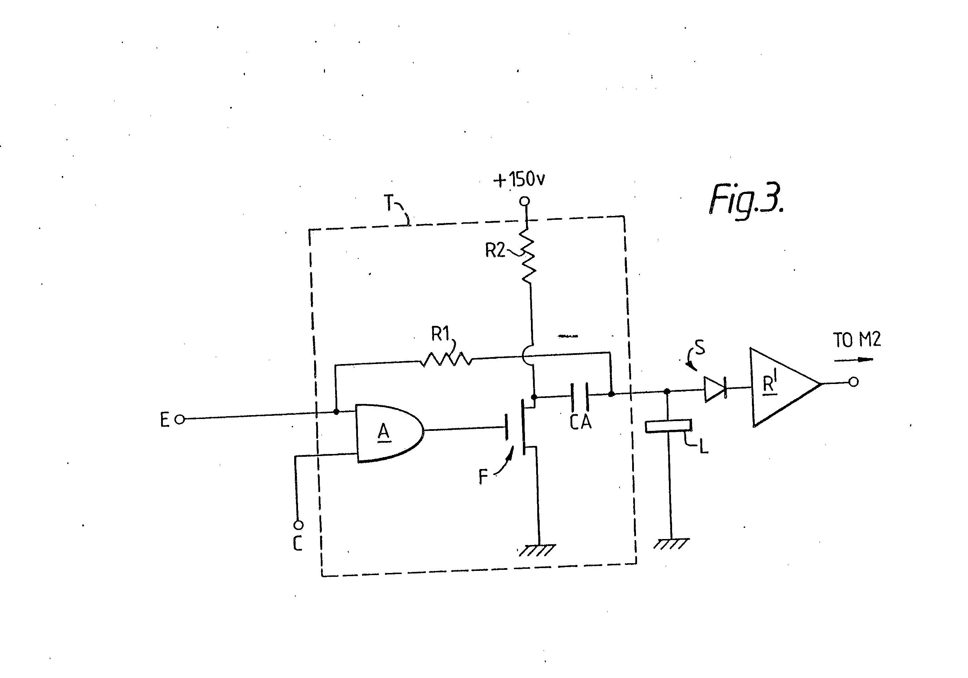

Referring now also to Figure 3, each transmitter circuit T of the system includes a two-input AND gate A whose inputs form the enable signal input E and the control signal input C of the transmitter. The output of the AND gate A is connected to the gate of a high-voltage field-effect transistor F. The source and drain of transistor F are respectively connected to earth and to a source of +150V potential through a resistor R2. The drain of transistor F is also connected to one terminal of a capacitor CA, the other terminal of which forms the output of the transmitter. The enable signal input E is connected to the output through a resistor R1.

Thus it will be appreciated that the quiescent output of the transmitter is controlled by the enable signal applied to the input E of the transmitter, the absence of an enable signal causing the output of the transmitter to fall to substantially 0V so as to prevent the diode switch S from conducting (a bias of +1.4V being applied at the receiver input), and the presence of an enable signal causing the output of the transmitter to rise to approximately +2.7V so as to allow the diode switch S to conduct.

It will also be appreciated that the transmitter produces a transmission pulse in the following way. With transistor F non-conducting (i.e. in the absence of both an enable signal and a control signal, or in the presence of only one of them) the terminal of the capacitor CA which is connected to the drain of the transistor is charged to +150V. On the application of an enable signal the other terminal of the capacitor is charged to approximately +2.7V, producing a potential of approximately 150V across the capacitor CA. On the application of a control signal transistor F begins to conduct and the potential at the drain of the transistor falls to 0V producing a negative voltage pulse of approximately -150V at the output of the transmitter.

In accordance with the invention a different number of elements is used in the selected active group in reception compared to transmission so as to reduce sidelobes in the resultant beam pattern. Figure 4 shows the far-field beam patterns produced using (a) twelve elements in the selected active group in reception and transmission, (b) eight elements in the selected active group in reception and transmission and (c) twelve elements in the selected active group in reception and eight elements in the selected active group in transmission.

It will be noted that in both the beam patterns (a) and (b) produced using the same number of elements in the selected active group in transmission and reception the first side lobe has a maximum which is approximately 26 dB down on the main lobe. By using different numbers of elements in the selected active group in reception compared to transmission in the ratio 3:2, the first minima of the transmission beam pattern fall on the first sidelobe maxima of the reception beam pattern, producing a resultant beam pattern having a first sidelobe maximum approximately 30-36 dB down on the main lobe. It can be shown that using different numbers of elements in the selected active group in reception compared to transmission in the ratio 4:3 causes the second minima of the reception beam pattern to fall on the first sidelobe maxima of the transmission beam pattern.

It will be appreciated that the exact number or ratio of elements is not critical, typically where interlacing is employed using successively odd and even numbers of elements in the selected active group 12 and 8 elements in the selected active group may be alternated with 11 and 7 elements in the active group in reception and transmission respectively.

It will also be appreciated that the use of a larger number of elements in the selected active group in reception than in transmission increases receiver sensitivity and allows the use of decreased transmitter power.

A different focal length is used in reception compared to transmission so as to obtain increased depth of field    by the combination of different focal lengths. Figure 5 shows the half-power beam width as a function of range from the transducer array of an ultrasonic beam produced using (a) twelve elements in the selected active group in transmission and reception at a focal length of 11 cm., (b) eight elements in the selected active group in transmission and reception at a focal length of 6 cm. and (c) twelve elements in reception at a focal length of 11 cm. and eight elements in transmission at a focal length of 6 cm. It will be appreciated that whereas the beams of (a) and (b) have useful depths of field extending from approximately 8 to 18 cm. and 4 to 12 cm. respectively, the beam of (c) has a useful depth of field extending from approximately 4 to 16 cm.

The transducer elements L are mechanically focussed in a direction perpendicular to the direction of scanning of the array.

## CLAIMS

1.          An ultrasonic imaging system utilising a multi-element ultrasonic transducer array for transmission and reception of ultrasonic signals characterised in that a different number of elements (L) is used in reception compared to transmission so as to reduce sidelobes in the resultant ultrasonic beam pattern (4(c)).

2.          A system according to claim 1 characterised in that the numbers of elements used in reception and transmission are in the ratio 3 : 2 or vice versa.

3.          A system according to claim 1 characterised in that the numbers of elements used in reception and transmission are in the ratio 4 : 3 or vice versa.

4.          A system according to claim 1, 2 or 3 characterised in that a larger number of elements is used in reception than is used in transmission.

5.          A system according to any preceding claim characterised in that the elements are focussed to a different focal length in reception compared to transmission.

6.          A system according to claim 5 characterised in that the elements are focussed to a larger focal length in reception than in transmission.

7.          A system according to claim 6 when dependent on claim 2 characterised in that substantially twelve elements are used in reception at a focal length of substantially eleven centimetres and substantially eight elements are used in transmission at a focal length of substantially six centimetres.

1/5

Fig.1.

Fig.2.

Fig.3.

+150v

TO M2

3/5

0017383

Fig.4.

Fig.5.

European Patent Office

**EUROPEAN SEARCH REPORT**

Application number

EP 80 30 0833.3

| | DOCUMENTS CONSIDERED TO BE RELEVANT | | CLASSIFICATION OF THE APPLICATION (Int. Cl.3) |
|---|---|---|---|
| Category | Citation of document with indication, where appropriate, of relevant passages | Relevant to claim | |
| P | DE - A1 - 2 855 888 (GENERAL ELECTRIC) * page 8, line 11 and the following * | 1 | G 01 S 15/89 A 61 B 10/00 |
| A | DE - B2 - 2 543 678 (TOKYO SHIBAURA ELECTRIC CO.) * fig. 1 to 7 * | | |
| P | DE - A1 - 2 908 799 (GENERAL ELECTRIC) * fig. 1 to 8 * | | **TECHNICAL FIELDS SEARCHED (Int.Cl.3)** A 61 B 10/00 |
| A | DE - A1 - 2 727 256 (AGENCE NATIONALE DE VALORISATION DE LA RECHERCHE) * fig. 1 to 7 * | | G 01 N 29/00 G 01 S 15/00 |
| A | DE - A - 2 333 531 (RAYTHEON) * fig. 1 to 19 * | | |
| A | US - A - 4 140 022 (S.H. MASLAK) * fig. 7 * | | |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons
&: member of the same patent family, corresponding document

The present search report has been drawn up for all claims

| Place of search | Date of completion of the search | Examiner |
|---|---|---|
| Berlin | 26-06-1980 | BREUSING |

EPO Form 1503.1 06.78